# EUROPEAN PATENT APPLICATION

(11) **EP 4 394 921 A1**
(43) Date of publication of application: **03.07.2024**
(21) Application number: 22955197.3
(22) Date of filing: 16.11.2022
(51) Int. Cl.: H01M 4/133, H01M 4/13, H01M 4/587, H01M 4/583, H01M 10/0525

(54) **NEGATIVE ELECTRODE MATERIAL AND BATTERY**

(71) Applicant: Kaifeng Ruifeng New Material Co., Ltd., Kaifeng, Henan 475231 (CN); BTR NEW MATERIAL GROUP CO., LTD., Shenzhen, Guangdong 518106 (CN)
(72) Inventor: HUANG, Jian, Kaifeng, Henan 475231 (CN); ZHANG, Baoxuan, Kaifeng, Henan 475231 (CN); LIU, Ruoqi, Kaifeng, Henan 475231 (CN); YANG, Shuzhan, Kaifeng, Henan 475231 (CN); REN, Jianguo, Kaifeng, Henan 475231 (CN)
(74) Representative: advotec.
(86) International application number: PCT/CN2022/132149
(87) International publication number: WO 2024/103272

(57) **Abstract**

The present disclosure provides an anode material and a battery, and the anode material comprises artificial graphite. An interior and/or a surface of the artificial graphite has pores, and the anode material has a pore volume of V cm³/kg, a specific surface area of S m²/g, and a tap density of T g/mL, where 8.5≤V*S/T≤27. The anode material and the battery provided by the present disclosure can improve electrochemical performance of the anode material while ensuring processing performance of the material.

## Description

### TECHNICAL FIELD

The present disclosure relates to a field of anode materials, and in particular, to an anode material and a battery.

### BACKGROUND

At present, graphite has become a mainstream commercial anode material of lithium ion batteries due to advantages such as high electronic conductivity, large lithium ion diffusion coefficient, a small volume change in a layered structure before and after lithium intercalation, high lithium intercalation capacity, and low lithium intercalation potential.

A traditional graphitization device for graphite anode mainly includes a crucible furnace and a box furnace, which both are in intermittent operation. Continuous production cannot be achieved due to the fact that the graphitization process needs to be powered off. Additionally, due to the limited characteristics of the temperature rising and cooling process of the device, the temperature rise and fall rates are slow, resulting in a long production period. Typically, the graphitization period ranges from 15 to 45 days. During the graphitization production, volatile components and impurity elements in raw materials escape under high temperature conditions, thereby forming pores at an interior and/or a surface of the graphite. Generally, artificial graphite has a certain number of pore structures. The presence of pores can increase a diffusion channel of Li⁺ inside the graphite material, and reduce diffusion resistance of Li⁺, thereby effectively improving rate performance of the material. In fact, the rate performance is not achieved optimal by simply improving the pore structures, and there is still a large improvement space. Most researchers have focused on exploring the impact of a single factor on the performance of the graphite material, without conducting in-depth studies from the perspective of the synergistic effects among multiple factors to maximize the improvement of the rate performance of the graphite.

Therefore, the single improvement of one parameter cannot meet market requirements for low-cost and high-performance graphite materials at the present stage where the graphite material has been developed to be very mature. It is necessary to explore the synergistic mechanisms of multiple factors to develop a graphite anode material meeting the market requirements.

### SUMMARY

In view of this, the present disclosure provides an anode material and a battery, which can improve rate performance and capacity of the anode material while improving processing performance of the material.

In a first aspect, the present disclosure provides an anode material. The anode material includes artificial graphite. An interior and/or a surface of the artificial graphite has pore structures, and the anode material has a pore volume of V cm³/kg, a specific surface area of S m²/g, and a tap density of T g/mL, where 8.5≤V*S/T≤27.

The pore volume is tested by using ASAP2460 device from American Micromeritics Instrument Ltd., and calculated in a pore size range of 17Å to 3000Å by using a model of BJH Desortation cumulative volume of pores.

In some embodiments, the pore volume of the anode material is V cm³/kg, where 5.0≤V≤8.0.

In some embodiments, the specific surface area of the anode material is S m²/g, where 1.78≤S≤3.00.

In some embodiments, the tap density of the anode material is T g/mL, where 0.734≤T≤1.160.

In some embodiments, the pores include at least one of micro-pores and meso-pores.

In some embodiments, an average pore size of the pores is 50Å to 200Å.

In some embodiments, the anode material is measured by X-ray diffraction, and a crystal plane spacing of a plane (002) of a graphite crystal is d₀₀₂, where 3.356Å≤d₀₀₂≤3.364Å.

In some embodiments, a particle size D₅₀ of the anode material is 10µm to 30µm.

In some embodiments, the anode material includes artificial graphite primary particles and/or artificial graphite secondary particles.

In some embodiments, the anode material further includes amorphous carbon.

In some embodiments, the anode material further includes the amorphous carbon, and a mass proportion of the amorphous carbon in the anode material ranges from 0.1wt% to 5wt%.

In a second aspect, the present disclosure provides a battery, the battery includes the anode material according to the first aspect.

The technical solution of the present disclosure has at least following beneficial effects.

The anode material provided by the present disclosure includes the artificial graphite, and an interior and/or a surface of the artificial graphite has pore structures. The anode material has the pore volume of V cm³/kg, the specific surface area of S m²/g, and the tap density of T g/mL, where 8.5≤V*S/T≤27. Generally, the pore volume of the artificial graphite within a certain range can increase diffusion channels of lithium ions, and reduce diffusion resistance of lithium ions, thereby effectively improving the rate performance of the material. The specific surface area within a certain range can ensure a sufficient electrochemical reaction interface, and promote the diffusion of lithium ions in a solid-liquid interface and a solid phase, reducing concentration polarization, and thereby facilitating improving the capacity and the rate performance of the anode material. After extensive research, the applicant has found that a migration rate of the lithium ions during migration is not only related to a migration space (namely the pore volume) and the size of the reaction interface, but also to the friction condition on the surface of the artificial graphite. Therefore, even if the pore volume and the specific surface area are sufficient, the lithium ions cannot be completely and smoothly de-intercalated, and the friction condition can directly affect the size of the tap density. Limiting V*S/T to this range can ensure that the lithium ions are more smoothly de-intercalated inside artificial graphite material particles in a proper space and a reaction interface, thereby improving the rate and capacity of the material to a greater extent.

The anode material provided by the present disclosure is produced and processed by a continuous graphitization process, so that all materials are continuously fed and continuously discharged, and all materials maintain consistent time and temperature after passing through a high-temperature region. The temperature rising and falling rate is controlled in the graphitization process, allowing the uniform and rapid escape of substances such as volatile components and impurity elements from the material, and thereby achieving accurate control of the internal and/or surface pore volume of graphite and control of the pore volume and the specific surface area of the material. Through the cooperative use of the above process methods, the problems that of uneven heating of materials caused by temperature gradients at different positions in traditional graphitization furnaces, as well as uncontrolled fluctuations in indicators such as specific surface area, pore volume, and tap density of the produced products, have been overcome. As a result, the pore volume, the specific surface area and the tap density of the processed materials meet ideal regulation and control design requirements.

The anode material provided by the present disclosure has low energy consumption per unit mass, obvious advantages in cost and production period, and is environment friendly.

### BRIEF DESCRIPTION OF DRAWINGS

FIG. 1 is a scanning electron microscopic image of an anode material according to Example 10 of the present disclosure; and
FIG. 2 is an enlarged view of a scanning electron microscopic image of an anode material according to Example 10 of the present disclosure.

### DESCRIPTION OF EMBODIMENTS

In order to better illustrate the present disclosure and facilitate the understanding of technical solutions of the present disclosure, the present disclosure will be further described in detail below. However, following examples are merely simple examples of the present disclosure and are not intended to represent or limit a protection scope of the present disclosure.

In a field of an anode material, the development of continuous graphitization devices has been ongoing for decades. As early as 1987, some patents (such as US06619591) were disclosed for devices capable of continuously graphitizing carbon-containing materials. In recent years, the applicant has continuously developed continuous graphitization devices. For example, a patent disclosed in 2019 with the publication number CN211425033U discloses a kiln for producing a vertical continuous lithium battery anode material, which can realize continuous discharging from a discharging port and continuous feeding from a material pipeline. Compared with a traditional graphitization process, the continuous graphitization process has the advantages that graphitizing time is shortened from several days to several hours, resulting in a substantial reduction in energy consumption. However, the graphitization time is greatly shortened, leading to changes in the microstructure of artificial graphite produced by the continuous graphitization process, especially changes in internal pore structure of the artificial graphite and the crystal form when compared with conventional artificial graphite. For a long time, it has been verified in the industry that the changes are difficult to meet the performance requirements of the artificial graphite and are difficult to improve. Therefore, even though the continuous graphitization devices has existed for three to four decades, artificial graphite anode products produced by the continuous graphitization devices always have no precedent of successful mass production.

In recent years, with the shortages of energy resources, in order to further reduce the cost of the artificial graphite, the applicant has been consistently developing the disclosure of the continuous graphitizationdevice. The objective is to develop an artificial graphite anode material which has performance comparable or even better than conventional graphitization anode materials, so as to reduce the energy consumption of the artificial graphite anode material and further reduce costs. The applicant had developed various means through extensive preparation processes to improve the adverse changes of rapid temperature rise and fall on artificial graphite products. After screening of the products, a series of different types of artificial graphite anode materials are obtained. Although the microstructure of these artificial graphite anode materials is different from that of conventional artificial graphite products, electrical performance of these artificial graphite anode materials can be basically equivalent to that of the conventional artificial graphite products, and even in some aspects, the electrical performance and processing performance of these artificial graphite anode materials are more excellent or stable, which already have conditions for replacing the conventional artificial graphite products.

Hereinafter, one of the preparation processes developed by the applicant is taken as an example to further describe the preparation process and related products in detail.

A method for preparing an anode material includes following steps.

S 10, green coke is shaped to obtain a coke powder.

S20, a mixture containing the coke powder, a binder and a solvent is press-molded under a pressure of 5Mpa to 100Mpa, to obtain a precursor. A mass ratio of the coke powder, the binder and the solvent is 100:(3 to 20):(5 to 50).

S30, the precursor in S20 is performed carbonization treatment at a temperature of 1000°C to 1500°C for 2 hours to 6 hours, followed by cooling to obtain a carbonized product.

S40, the precursor is placed in a continuous graphitization furnace for graphitization treatment to obtain the anode material. The specific way of graphitization treatment includes: the temperature is raised to 2800°C to 3200°C at a heating rate of 12°C/min to 25°C/min. After remaining at 2800°C to 3200°C for 2 hours to 5 hours, the temperature is cooled to 30°C at a cooling rate of 22°C/min to 26°C/min. A ratio of the heating rate of the graphitization treatment to the heating rate of carbonization treatment is controlled between 4 and 8.

According to the method for preparing an anode material provided by the present disclosure, the mixture of the coke powder, the binder and the solvent is press-molded. The press-molded product is performed carbonization treatment under a certain temperature condition. The carbonized product is then directly placed in the continuous graphitization furnace with an extremely fast heating rate. The precursor can reach the graphitization temperature in a short period after rapid heating, causing impurity atoms to volatilize and escape, forming pores at an interior and/or a surface of the graphite particle. In addition, the process from feeding to discharging of the materials in the continuous graphitization furnace is completed only within a few hours, and a continuous operation mode is used. The materials are continuously fed and discharged without any power-off process. The temperature gradient difference at different positions in the continuous graphitization furnace is small, which can improve the graphitization uniformity of the anode material. Moreover, the continuous graphitization furnace has high heat energy utilization rate, and the production cost can be reduced.

In some embodiments, the green coke includes at least one of petroleum coke, needle coke, asphalt coke, and isotropic coke.

In some embodiments, shaping includes at least one of crushing, spheroidizing, or grading, and shaping process facilitates improving particle morphology and increasing the tap density.

A median particle size of the shaped coke powder ranges from 10µm to 20µm, e.g., 10µm, 11.5µm, 12µm, 13µm, 15µm, 17µm, 18µm, 18.5µm, 19µm or 20µm, which is not limited to the listed values, and other unlisted values within this range are further applicable. After multiple experiments, it was found that controlling the median particle size of the coke powder within the above range is beneficial for balancing processing performance, capacity, and rate performance.

In some embodiments, the mass content of carbon in the coke powder is greater than or equal to 80%, e.g., 80%, 81%, 82%, 85%, 90%, 95% or 96%, which is not limited to the listed values, and other unlisted values within the range are further applicable.

In some embodiments, the solvent includes at least one of water, ethanol, acetone, benzene, toluene, quinoline, tetrahydrofuran, and carbon tetrachloride.

In some embodiments, the binder includes at least one of heavy oil, mineral oil, coal tar, ethylene tar, asphalt, petroleum resin, phenolic resin, epoxy resin, coumarone resin, potato starch, wheat starch, corn starch, sweet potato starch, kudzu root starch, and tapioca flour. The asphalt may be at least one of petroleum-based liquid asphalt and coal-based liquid asphalt. In an embodiment, the petroleum-based liquid asphalt may be petroleum asphalt, modified asphalt, and mesophase asphalt.

In some embodiments, the mass ratio of the coke powder, the binder and the solvent is 100:(3 to 20):(5 to 50), e.g., 100:3:5, 100:10:15, 100:15:20, 100:20:20, 100:20:15, 100:10:10, or 100:15:25, which is not limited to the listed values, and other unlisted values within the range are further applicable.

It can be understood that, in an example, when the proportion of the binder is relatively low (the mass ratio of the binder to the coke powder is (3 to 10):100), the obtained artificial graphite is mainly made of primary particles. In an example, when the proportion of the binder is relatively high (the mass ratio of the binder to the coke powder is (10 to 20):100), the obtained artificial graphite is mainly made of secondary particles.

In some embodiments, a manner of mixing the mixture includes at least one of mechanical stirring and ultrasonic dispersion. When mechanical stirring is used for mixing, a rotary slurry stirrer, a turbine stirrer, and a flat slurry stirrer may be used, as long as components in the mixture are fully and uniformly mixed.

In some embodiments, a stirring rate ranges from 10r/min to 1000r/min, e.g., 10r/min, 50r/min, 70r/min, 100r/min, 120r/min, 150r/min, 200r/min, 300r/min, 350r/min, 400r/min, 500r/min, or 1000r/min, which is not limited herein. The stirring rate is controlled within the above range to facilitate mixing of the components to form a uniform mixture.

The stirring can be carried out at normal temperature or in a preheating state. In some embodiments, the stirring temperature may be controlled at 25°C to 200°C. It can be understood that proper preheating facilitates mixing of the components to form a uniform mixture.

In some embodiments, the press-molding includes at least one of extrusion, die pressing, roll pressing, and isostatic pressing.

In some embodiments, the pressure of the press-molding ranges from 5MPa to 100MPa, e.g., 5MPa, 15MPa, 25MPa, 30MPa, 35MPa, 40MPa, 45MPa, 50MPa, 55MPa, 60MPa, 70MPa, 80MPa, 90MPa, or 100MPa. On one hand, the flowability of the material in the graphitization process can be improved by a molding process, thereby accelerating the cooling rate of a graphitization cooling process, facilitating controlling microstructure, specific surface area and tap density. On the other hand, the charge batch and productivity is improved.

In some embodiments, the temperature of the carbonization treatment may specifically be 1000°C, 1050°C, 1100°C, 1200°C, 1300°C, 1400°C or 1500°C, which is not limited to the listed values, and other unlisted values within the range are further applicable. It can be understood that the temperature of the carbonization treatment is within the above range, which is beneficial to discharge of volatile substances in raw material, and is beneficial to form pore structures meeting requirements.

In some embodiments, the holding time of the carbonization treatment is 2 hours to 6 hour, e.g., 2 hours, 2.5 hours, 3 hours, 4 hours, 5 hours or 6 hours, which is not limited to the listed values, and other unlisted values within the range are further applicable.

In some embodiments, the carbonized product is obtained by natural cooling after the carbonization treatment.

In some embodiments, the holding temperature of the graphitization treatment may specifically be 2800°C, 2900°C, 3000°C, 3050°C, 3100°C, 3150°C, 3180°C or 3200°C, which is not limited to the listed values, and other unlisted values within the range are further applicable.

In some embodiments, the holding time of the graphitization treatment is 2 hours to 5 hours, e.g., 2 hours, 2.5 hours, 3 hours, 3.5 hours, 3.8 hours, 4 hours, 4.5 hours, or 5 hours, which is not limited to the listed values, and other unlisted values within the range are further applicable. In an embodiment, the holding time of the graphitization treatment is 2 hours to 3 hours.

In some embodiments, the heating rate of the graphitization treatment is 12°C/min to 25°C/min, e.g., 12°C/min, 13°C/min, 15°C/min, 18°C/min, 20°C/min, or 25°C/min, which is not limited to the listed values, and other unlisted values within the range are further applicable. On one hand, a rapid heating rate facilitates the control of pore volume and specific surface of the material, and meanwhile, heat dissipation and production cost can be reduced.

In some embodiments, the cooling rate of the graphitization treatment is 22°C/min to 26°C/min, e.g., 22°C/min, 23°C/min, 24°C/min, 24.5°C/min, 25°C/min, 25.5°C/min or 26°C/min, which is not limited to the listed values, and other unlisted values within the range are further applicable. A rapid cooling rate can greatly shorten the graphitization processing period and reduce the production cost.

In some embodiments, a ratio of the heating rate of the graphitization treatment to the heating rate of the carbonization treatment is controlled between 4 and 8, e.g., 4, 4.5, 5, 6, 7, or 8. The heating rates of the graphitization treatment and the carbonization treatment are maintained within the above range, which can affect the pore structure, surface microstructure and friction condition of the material, thereby facilitating the control of the specific surface area and the tap density of the material, and forming a certain amount of pore volume inside the artificial graphite without using a pore-forming agent.

In some embodiments, after the graphitization treatment, at least one of crushing, sieving and demagnetizing is further performed. In an embodiment, after the carbonization treatment, crushing, demagnetizing and sieving are performed in sequence.

In some embodiments, the crushing manner includes any one of a mechanical crusher, an air flow crusher, and a low-temperature crusher.

In some embodiments, the sieving manner includes any one of a fixed sieve, a drum sieve, a resonance sieve, a roller sieve, a vibrating sieve and a chain sieve. The mesh number for sieving is 100 meshes to 500 meshes, e.g., 100 meshes, 200 meshes, 250 meshes, 325 meshes, 400 meshes, and 500 meshes. The particle size of the anode material is controlled within the above range, which is beneficial to the improvement of the processing performance of the anode material.

In some embodiments, the demagnetizing device is any one of a permanent magnet drum magnetic separator, an electromagnetic iron remover and a pulsating high gradient magnetic separator, and the demagnetizing is to ultimately control the magnetic substance content of the anode material, avoid the discharge effect of the magnetic substance on the battery, and ensure the safety of the battery during use.

In an embodiment, the anode material includes the artificial graphite. An interior and/or a surface of the graphite particle has pores. The anode material has a pore volume of V cm³/kg, a specific surface area of S m²/g, and a tap density of T g/mL, where 8.5≤V*S/T≤27. The pore volume is tested by using ASAP2460 device from American Micromeritics Instrument Ltd., and calculated in a pore size range of 17Å to 3000Å by using a model of BJH Desortation cumulative volume of pores.

The anode material provided by the present disclosure is produced and processed by the continuous graphitization process. All materials maintain consistent time and temperature after passing through a high-temperature region, and the temperature rising and falling rate is controlled, allowing the uniform and rapid escape of substances such as volatile components and impurity elements from the material, and thereby ensuring that the pore volume, the specific surface area and the tap density of the material meet ideal regulation and control design requirements.

Generally, the pore volume of the artificial graphite within a certain range can increase the diffusion channel of Li⁺ and reduce the diffusion resistance of Li⁺, thereby effectively improving the rate performance of the material. The specific surface area within a certain range can ensure a sufficient electrochemical reaction interface and promote the diffusion of lithium ions in a solid-liquid interface and a solid phase, reducing concentration polarization, and thereby facilitating improving the capacity and the rate performance of the anode material. After extensive research, the applicant has found that a migration rate of the lithium ions during migration is not only related to a migration space (namely the pore volume) and the size of the reaction interface, but also to the friction condition on the surface of the artificial graphite. Therefore, even if the pore volume and the specific surface area are sufficient, the lithium ions cannot be completely and smoothly de-intercalated, and the friction condition can directly affect the size of the tap density. Limiting V*S/T to this range can ensure that the lithium ions are more smoothly de-intercalated inside the artificial graphite material particles in a proper space and a reaction interface, thereby improving the rate and capacity of the material to a greater extent.

In some embodiments, the pore volume of the anode material is V cm³/kg, where 5.0≤V≤8.0, e.g., 5.0, 5.1, 5.2, 5.5, 5.8, 6.0, 6.3, 6.5, 6.8, 6.9, 7.0, 7.1, 7.5, 7.6, 7.8 or 8.0, which is not limited herein.

In some embodiments, the pores include at least one of micro-pores and meso-pores. The micro-pores are pores with a pore diameter smaller than 2nm, and the meso-pores are pores with a pore diameter between 2nm and 50nm. Rich pores are formed in/on the surface of the graphite, which facilitates creating more lithium ion diffusion channels, thereby improving electrochemical performance of the anode material.

In some embodiments, the average pore size of the pores is 50Å to 200Å. In an embodiment, the average pore diameter of the pores may be specifically 50Å, 60Å, 70Å, 100 Å, 150Å, or 200Å.

In some embodiments, the specific surface area of the anode material is S m²/g, where 1.78≤S≤3.00, e.g., 1.78, 1.85, 1.95, 2.00, 2.25, 2.43, 2.57, 2.61, 2.72, 2.75, 2.80, or 3.00, which is not limited herein. It can be understood that an excessive large specific surface area may easily result in the formation of a solid electrolyte membrane, so that too much irreversible lithium salt is consumed, and the initial efficiency of the battery is reduced.

In some embodiments, the tap density of the anode material is T g/ml, where 0.734≤T≤1.160, e.g., 0.734, 0.751, 0.768, 0.784, 0.797, 0.818, 0.822, 0.837, 0.863, 0.989, 0.963, 0.958, 0.983, 0.981, 0.997, 1.012, 1.023, 1.033, 1.041, 1.086, or 1.160, which is not limited herein.

In some embodiments, the anode material is measured by X-ray diffraction, and a crystal plane spacing of a plane (002) of a graphite crystal is d₀₀₂, where 3.356Å≤d₀₀₂≤3.364Å. The crystal plane spacing d₀₀₂ is within the above range, and it can be seen that the artificial graphite particles have high graphite crystalline degree, namely a high graphitization degree.

In some embodiments, the particle size D₅₀ of the anode material is 10µm to 30µm, e.g., 10µm, 11µm, 12µm, 13µm, 14µm, 15µm, 20µm, 25µm, or 30µm, which is not limited herein. In an embodiment, the particle size of 50% in cumulative particle size distribution of a volume basis of the anode material may be obtained by a laser diffraction method. In an embodiment, the particle size D₅₀ of the anode material is 10µm to 20µm.

In some embodiments, the anode material includes artificial graphite primary particles and/or artificial graphite secondary particles.

In some embodiments, the anode material further includes amorphous carbon. It can be understood that after the graphitization treatment, a part of an adhesive may be difficult to convert into graphitized carbon, and a part that cannot be converted into the graphitized carbon exists on the surface of the artificial graphite particles in the form of amorphous carbon.

In some embodiments, a mass ratio of the amorphous carbon in the anode material is 0.1wt% to 5wt%, and the presence of a small amount of the amorphous carbon provides more irregular and more open diffusion paths for the lithium ions, which facilitates the improvement of the rate performance of the material.

In some embodiments, the specific capacity of the anode material is 320mAh/g to 370mAh/g, e.g., 320mAh/g, 340mAh/g, 342mAh/g, 345mAh/g, 353mAh/g, 355mAh/g, 357mAh/g, 360mAh/g, 365mAh/g, or 370mAh/g, which is not limited herein.

In some embodiments, the first coulombic efficiency of the anode material is greater than or equal to 93%, e.g., 93.0%, 93.1%, 94.3%, 94.4%, 94.5%, 94.6%, 94.7%, 94.8%, 94.9%, or 95.1%, which is not limited herein.

A battery includes the anode material above.

Those skilled in the art will understand that the preparation method of the battery described above is only an example. Other methods commonly used in the art can be used without departing from the scope of the present disclosure, and other types of batteries can further be prepared for testing, such as sodium ion batteries and potassium ion batteries.

The present disclosure are further described below through multiple examples. The examples of the present disclosure are not limited to following specific examples. Within the protection scope, changes can be implemented appropriately.

### Example 1

A method for preparing an anode material of this example included following steps.
(1) Shandong Jingyang coke was crushed and shaped with a shaping device to obtain the crushed and shaped coke powder, with a median particle size controlled at 12µM.
(2) The coke powder was uniformly mixing with coal tar and quinoline according to a mass ratio of 100:5:20 to obtain a mixture.
(3) The mixture was press-molded under 20MPa pressure to obtain a precursor.
(4) The precursor was carbonized at a temperature of 1100°C for 4 hours, where a heating rate of the carbonization treatment was 3.3°C/min, followed by cooling to obtain a carbonized product.
(5) The carbonized product was graphitized at 3100°C in a continuous graphitization furnace to obtain a graphitized product. A heating curve was as follows: the temperature was raised to 3100°C at a heating rate 17.2°C/min, and remained at 3100°C for 3 hours, followed by cooled to 30°C at a cooling rate of 25.6°C/min. A ratio of the heating rate during graphitization to the heating rate during carbonization was controlled to be 5.2.
(6) The graphitized product was scattered, demagnetized and sieved to obtain the anode material of the artificial graphite.

The anode material included primary particle artificial graphite and secondary particle artificial graphite, most of which were the primary particle artificial graphite.

### Example 2

A method for preparing an anode material of this example included following steps.
(1) Shandong Jingyang needle coke was crushed and shaped with a shaping device to obtain the crushed and shaped coke powder, with a median particle size controlled at 12µM.
(2) The coke powder was uniformly mixing with phenolic resin and water according to a mass ratio of 100:5:20 to obtain a mixture.
(3) The mixture was press-molded under 20MPa pressure to obtain a precursor.
(4) The precursor was carbonized at a temperature of 1100°C for 4 hours, where a heating rate of the carbonization treatment was 3.3°C/min, followed by cooling to obtain a carbonized product.
(5) The carbonized product was graphitized at 3100°C in a continuous graphitization furnace to obtain a graphitized product. A heating curve was as follows: the temperature was raised to 3100°C at a heating rate 16.0°C/min for 3.2 hours, and remained at 3100°C for 3 hours, followed by cooled to 30°C at a cooling rate of 22°C/min for 2.3 hours. A ratio of the heating rate during graphitization to the heating rate during carbonization was controlled to be 4.8.
(6) The graphitized product was scattered, demagnetized and sieved to obtain the anode material of the artificial graphite.

The anode material obtained in this example included primary particle artificial graphite and secondary particle artificial graphite, most of which were the primary particle artificial graphite.

### Example 3

A method for preparing an anode material of this example included following steps.
(1) Daqing petroleum coke was crushed and shaped with a shaping device to obtain the crushed and shaped coke powder, with a median particle size controlled at 15µM.
(2) The coke powder was uniformly mixing with coal tar and quinoline according to a mass ratio of 100:5:15 to obtain a mixture.
(3) The mixture was press-molded under 20MPa pressure to obtain a precursor.
(4) The precursor was carbonized at a temperature of 1200°C for 3 hours, where a heating rate of the carbonization treatment was 3.2°C/min, followed by cooling to obtain a carbonized product.
(5) The carbonized product was graphitized at 3000°C in a continuous graphitization furnace to obtain a graphitized product. A heating curve was as follows: the temperature was raised to 3000°C at a heating rate 13.5°C/min for 3.7 hours, and remained at 3000°C for 3 hours, followed by cooled to 30°C at a cooling rate of 24.7°C/min for 2 hours. A ratio of the heating rate during graphitization to the heating rate during carbonization treatment was controlled to be 4.2.
(6) The graphitized product was scattered, demagnetized and sieved to obtain the anode material of the artificial graphite.

The anode material obtained in this example included primary particle artificial graphite and secondary particle artificial graphite, most of which were the primary particle artificial graphite.

### Example 4

A method for preparing an anode material of this example included following steps.
(1) Daqing petroleum coke was crushed and shaped with a shaping device to obtain the crushed and shaped coke powder, with a median particle size controlled at 15µM.
(2) The coke powder was uniformly mixing with phenolic resin and water according to a mass ratio of 100:5:15 to obtain a mixture.
(3) The mixture was press-molded under 20MPa pressure to obtain a precursor.
(4) The precursor was carbonized at a temperature of 1150°C for 4 hours, where a heating rate of the carbonization treatment was 3.1°C/min, followed by cooling to obtain a carbonized product.
(5) The carbonized product was graphitized at 3000°C in a continuous graphitization furnace to obtain a graphitized product. A heating curve was as follows: the temperature was raised to 3000°C at a heating rate 14.3°C/min for 3.5 hours, and remained at 3000°C for 3 hours, followed by cooled to 30°C at a cooling rate of 22.5°C/min for 2.2 hours. A ratio of the heating rate during graphitization to the heating rate during carbonization treatment was controlled to be 4.6.
(6) The graphitized product was scattered, demagnetized and sieved to obtain the anode material of the artificial graphite.

The anode material obtained in this example included primary particle artificial graphite and secondary particle artificial graphite, most of which were the primary particle artificial graphite.

### Example 5

It differs from Example 1 in that the carbonization temperature in step (4) was 1500°C.

The anode material obtained in this example included primary particle artificial graphite and secondary particle artificial graphite, most of which were the primary particle artificial graphite.

### Example 6

It differs from Example 1 in that the carbonization temperature in step (4) was 1000°C.

The anode material obtained in this example included primary particle artificial graphite and secondary particle artificial graphite, most of which were the primary particle artificial graphite.

### Example 7

It differs from Example 1 in that the carbonization time in step (4) was 3 hours.

The anode material obtained in this example included primary particle artificial graphite and secondary particle artificial graphite, most of which were the primary particle artificial graphite.

### Example 8

It differs from Example 1 in that the carbonization time in step (4) was 6 hours.

The anode material obtained in this example included primary particle artificial graphite and secondary particle artificial graphite, most of which were the primary particle artificial graphite.

### Example 9

It differs from Example 1 in that the coke powder, the coal tar and the quinoline in step (2) were uniformly mixed in a mass ratio of 100:3:20 to obtain a mixture.

The anode material obtained in this example included primary particle artificial graphite and secondary particle artificial graphite, most of which were the primary particle artificial graphite.

### Example 10

It differs from Example 9 in that the raw material used in step (1) was Daqing petroleum coke, and the coke powder, the coal tar and the quinoline in step (2) were uniformly mixed in a mass ratio of 100:20:20 to obtain a mixture A.

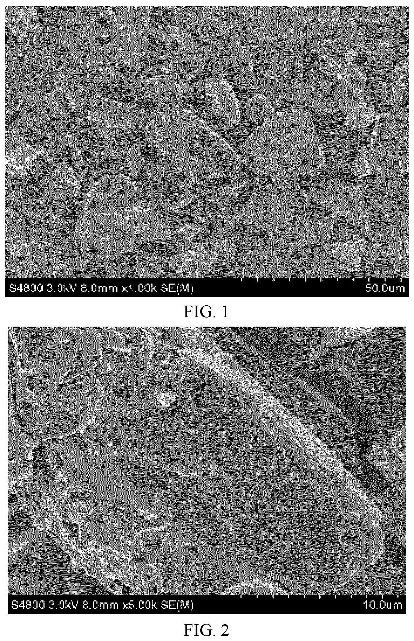

The anode material obtained in this example included primary particle artificial graphite and secondary particle artificial graphite. It could be seen from scanning electron microscopic images of FIG. 1 and FIG. 2 that most of the secondary particle artificial graphite had a relatively flat overall surface and a relatively good morphology.

### Example 11

It differs from Example 9 in that the raw material used in step (1) was Jinzhou petrochemical petroleum coke, and the coke powder, the coal tar and the quinoline in step (2) were uniformly mixed in a mass ratio of 100:5:5 to obtain a mixture.

The anode material obtained in this example included primary particle artificial graphite and secondary particle artificial graphite, most of which were the primary particle artificial graphite.

### Example 12

It differs from Example 10 in that the coke powder, the coal tar and the quinoline in step (2) were uniformly mixed in a mass ratio of 100:5:50 to obtain a mixture.

The anode material obtained in this example included primary particle artificial graphite and secondary particle artificial graphite, most of which were the primary particle artificial graphite.

### Example 13

It differs from Example 10 in that the coke powder, the phenolic resinand the ethanol in step (2) were uniformly mixed in a mass ratio of 100:5:20 to obtain a mixture.

The anode material obtained in this example included primary particle artificial graphite and secondary particle artificial graphite, most of which were the primary particle artificial graphite.

### Example 14

It differs from Example 10 in that the coke powder, the epoxy resin the water in step (2) were uniformly mixed in a mass ratio of 100:5:20 to obtain a mixture.

The anode material obtained in this example included primary particle artificial graphite and secondary particle artificial graphite, most of which were the primary particle artificial graphite.

### Example 15

It differs from Example 10 in that the molding pressure in step (3) was 5MPa.

The anode material obtained in this example included primary particle artificial graphite and secondary particle artificial graphite, most of which were the primary particle artificial graphite.

### Example 16

It differs from Example 10 in that the molding pressure in step (3) was 100MPa.

The anode material obtained in this example included primary particle artificial graphite and secondary particle artificial graphite, most of which were the primary particle artificial graphite.

### Example 17

It differs from Example 10 in that the temperature of the graphitization treatment in step (5) was 3000°C.

The anode material obtained in this example included primary particle artificial graphite and secondary particle artificial graphite, most of which were the primary particle artificial graphite.

### Example 18

It differs from Example 10 in that the temperature of the graphitization treatment in step (5) was 3200°C.

The anode material obtained in this example included primary particle artificial graphite and secondary particle artificial graphite, most of which were the primary particle artificial graphite.

### Example 19

It differs from Example 10 in that the heating curve of the graphitization process in step (5) was as follows: the heating rate of 12°C/min was raised to 3000°C.

The anode material obtained in this example included primary particle artificial graphite and secondary particle artificial graphite, most of which were the primary particle artificial graphite.

### Example 20

It differs from Example 10 in that the holding time of the graphitization treatment in step (5) was 5 hours.

The anode material obtained in this example included primary particle artificial graphite and secondary particle artificial graphite, most of which were the primary particle artificial graphite.

### Comparative Example 1

It differs from Example 1 in that in step (5), the carbonized product was loaded into a graphite crucible, and then the graphite crucible was transferred into an Acheson furnace for graphitization treatment to obtain an anode material. The heating curve was as follows: the temperature was raised to 3100°C at a heating rate of 0.7°C/min, and maintained for 3 hours, followed by cooled to 30°C at a cooling rate of 0.1°C/min. A ratio of the heating rate of the graphitization treatment to the heating rate of the carbonization treatment was controlled to 0.2 to obtain the anode material.

### Comparative Example 2

The raw material of Shandong Jingyang needle coke was crushed and shaped by a shaping device to obtain coke powder with a median particle size of 12µm, then the coke powder was carbonized at a temperature of 1100°C for 4 hours. The carbonized coke powder was loaded into a graphite crucible, and then the graphite crucible was transferred into an Acheson furnace for graphitization treatment to obtain an anode material. The heating curve was as follows: the temperature was raised to 3100°C at a heating rate of 0.7°C/min, and maintained for 8 hours, followed by cooled to 30°C at a cooling rate of 0.1°C/min. A ratio of the heating rate of the graphitization treatment to the heating rate of the carbonization treatment was controlled to 0.2 to obtain the anode material.

### Comparative Example 3

The raw material of Shandong Jingyang needle coke was carbonized at a temperature of 1100°C for 4 hours, and then was put into a conventional continuous graphitization furnace for graphitization treatment. The heating curve was as follows: the temperature was raised to 2900°C at a heating rate of 9.6°C/min, and was maintained for 3 hours, followed by cooled to 30°C at a cooling rate of 10°C/min. A ratio of the heating rate of the graphitization treatment of the anode material to the heating rate of the carbonization treatment of the anode material was controlled to 2 after shaping and crushing to obtain the anode material.

### Test Methods

### (1) Test method for particle size of anode material

A particle size distribution range of the anode material was tested by a Markov laser particle size meter.

### (2) Test method for specific surface area of anode material

A dynamic specific surface area rapid tester JW-DX with a unit m²/g from Beijing JWGB Sci & Tech Ltd was used for testing.

### (3) Test method for surface morphology of anode material

The surface morphology of anode material particles was observed by a Hitachi S4800 scanning electron microscope.

### (4) Test method for tap density of anode material

A Dual Autotap test of a Contana tap density analyzer from Antonpa (Shanghai) Trading Co., Ltd. was used for testing, and the tap density T was a value after 1000 vibrations in g/mL.

### (5) Test method for crystal plane spacing of graphite crystal of anode material

An X-ray diffraction method was used to characterize the crystal plane spacing d₀₀₂ of a graphite crystal (002) plane in the anode material with the unit of Å.

### (6) Test method for battery performance

The anode material, carboxymethyl cellulose, conductive carbon black and styrenebutadiene rubber prepared in Examples 1 to 20 and Comparative Examples 1 to 3 were magnetically stirred in deionized water at a mass ratio of 95:1.5:1.5:2 for 8 hours to be uniformly mixed. The mixed slurry was coated on copper foil and dried under vacuum at 60°C as a working electrode. Metal lithium was used as a counter electrode and a reference electrode. A diaphragm was Celgard2325. An electrolyte was 1mol·L-1LiPF6-EC (ethylene carbonate)/DMC (dimethyl carbonate)/EMC (ethyl methyl carbonate) (volume ratio was 1:1:1), and CR2016 coin battery assembly was achieved in a glove box filled with high-purity argon.

First discharge capacity/first discharge efficiency test was performed on a LAND battery tester, and charging and discharging conditions were as follows: standing for 2 hours; discharging: 0.1C to 0.005V, 0.09C, 0.08C, ..., 0.02C to 0.001V; standing for 15min; charging: 0.1C to 1.5V; and standing for 15min.

A coin half-battery was tested for rate performance at 25±2°C to obtain charge discharge specific capacity and coulombic efficiency of 0.2C, 1C and 2C. The charging and discharging conditions of the coin battery were tested: ① discharging at a rate of 0.1C to 0.01V, keeping a constant voltage for 5 hours, then charging at a rate of 0.1C to 1.5V; ② discharging at a rate of 0.2C to 0.01V, keeping a constant voltage to 0.01C, then charging at a rate of 0.2C to 1.5V; ③ discharging at a rate of 0.2C to 0.01 V, keeping a constant voltage to 0.01C, then charging at a rate of 2C to 1.5V; ④ discharging at a rate of 0.2C to 0.01 V, keeping a constant voltage to 0.01C, then charging at a rate of 0.2C to 1.5V; ⑤ discharging at a rate of 1C to 0.01V, keeping a constant voltage to 0.01C, then charging at a rate of 0.2C to 1.5V; and ⑥ discharging at a rate of 2C to 0.01V.

Full battery test: the anode material prepared in each example was used as an anode active material. The anode active material, a conductive agent, the binder, and the dispersant were dissolved and mixed in water according to a mass percentage of 95.2:1.5:2:1.3, with a controlled solid content of 50wt%, then coated on a copper foil current collector with a thickness of 8µm, and dried in vacuum to prepare an anode plate. Lithium iron phosphate, polyvinylidene fluoride and conductive agent carbon black were uniformly mixed with a solvent NMP (N-methylpyrrolidone) according to a mass ratio of 95:2:3, then coated on an aluminum foil with a thickness of 16µm, and dried in vacuum to prepare a cathode plate. The coated positive and anode plate were processed steps including slicing, winding, drying, liquid injection, sealing, formation and volume separation to produce a 554065-type soft package lithium ion battery.

The obtained soft package battery was charged and discharged on a LAND battery test system of Wuhan Kono Electronics Co., Ltd. Under normal temperature conditions, charging and discharging are conducted at a rate of 1C/1C. The charge and discharge voltage was controlled to 3.0V to 4.35V, and first effect and 500-cycle capacity retention rate tests was conducted (the compaction density of the anode plate was 1.60g/cm³).

The results of the above performance test are as follows.

**Table 1. Comparison Result of Performances of Anode Materials**

| Sample | Pore Volume V (cm³/kg) | Specific Surface Area S (m²/g) | Tap Density T (g/mL) | V*S/ T | Mean Pore Size of Pores (Å) | D₅₀ (µm) | d₀₀₂ (Å) | Graphitization Energy Consumption (kwh/ton) |
|---|---|---|---|---|---|---|---|---|
| S1 | 7.04 | 2.77 | 0.734 | 26.57 | 98.5 | 12.4 | 3.357 | 2500 |
| S2 | 6.91 | 2.65 | 0.751 | 24.41 | 103.2 | 12.7 | 3.357 | 2600 |
| S3 | 6.78 | 2.57 | 0.768 | 22.71 | 89.4 | 16.1 | 3.358 | 2500 |
| S4 | 6.55 | 2.50 | 0.784 | 20.86 | 81.2 | 15.6 | 3.357 | 2500 |
| S5 | 6.37 | 2.36 | 0.797 | 18.90 | 93.3 | 12.7 | 3.358 | 2700 |
| S6 | 6.49 | 2.31 | 0.818 | 18.36 | 114.5 | 12.2 | 3.358 | 2600 |
| S7 | 6.51 | 2.29 | 0.822 | 18.09 | 96.3 | 12.9 | 3.358 | 2600 |
| S8 | 6.46 | 2.28 | 0.837 | 17.56 | 91.2 | 12.6 | 3.357 | 2600 |
| S9 | 6.37 | 2.37 | 0.958 | 15.75 | 57.6 | 12.4 | 3.358 | 2600 |
| S10 | 6.73 | 2.25 | 0.989 | 15.30 | 173.7 | 17.6 | 3.359 | 2600 |
| S11 | 6.48 | 2.17 | 0.980 | 14.34 | 96.7 | 15.6 | 3.362 | 2500 |
| S12 | 5.93 | 2.17 | 0.958 | 13.41 | 134.5 | 15.3 | 3.359 | 2600 |
| S13 | 5.25 | 2.04 | 0.830 | 12.90 | 83.4 | 15.7 | 3.359 | 2600 |
| S14 | 5.63 | 1.91 | 0.981 | 10.94 | 79.5 | 15.1 | 3.359 | 2600 |
| S15 | 5.60 | 1.89 | 0.997 | 10.59 | 106.8 | 14.8 | 3.359 | 2600 |
| S16 | 5.57 | 3.12 | 1.012 | 17.17 | 116.7 | 15.2 | 3.359 | 2600 |
| S17 | 5.72 | 1.84 | 1.055 | 9.95 | 125.3 | 15.7 | 3.359 | 2400 |
| S18 | 5.56 | 1.79 | 1.026 | 9.72 | 117.4 | 16.1 | 3.358 | 2600 |
| S19 | 4.39 | 1.92 | 1.011 | 8.34 | 56.8 | 15.3 | 3.359 | 2400 |
| S20 | 5.06 | 1.79 | 1.056 | 8.58 | 123.2 | 14.9 | 3.358 | 2700 |
| D1 | 7.83 | 2.97 | 0.670 | 34.82 | 94.6 | 15.3 | 3.362 | 13000 |
| D2 | 1.56 | 1.48 | 1.180 | 1.96 | 35.6 | 15.9 | 3.359 | 14500 |
| D3 | 5.03 | 1.82 | 1.147 | 7.98 | 84.6 | 16.2 | 3.359 | 2600 |

**Table 2. Comparison Results of Battery Performances**

| Sample | Specific Capacity (mAh/g) | First Week Coulombic Efficiency (%) | 1C/0.2C Capacity Retention Rate (%) | 2C/0.2C Capacity Retention Rate (%) | 500-Cycle Capacity Retention Rate (%) |
|---|---|---|---|---|---|
| S1 | 356.5 | 94.7% | 57.1 | 16.6 | 91.4 |
| S2 | 355.2 | 95.1% | 58.8 | 17.1 | 92.5 |
| S3 | 348.2 | 94.5% | 61.7 | 21.2 | 90.8 |
| S4 | 350.3 | 94.6% | 61.4 | 21.5 | 90.5 |
| S5 | 356.1 | 94.4% | 58.2 | 17.4 | 91.7 |
| S6 | 357.8 | 94.6% | 56.4 | 16.8 | 91.2 |
| S7 | 353.0 | 94.6% | 58.5 | 17.3 | 91.4 |
| S8 | 354.3 | 94.7% | 58.2 | 17.6 | 90.8 |
| S9 | 356.6 | 94.5% | 56.9 | 17.2 | 91.2 |
| S10 | 347.4 | 94.6% | 61.5 | 21.4 | 91.2 |
| S11 | 348.3 | 94.4% | 62.7 | 22.3 | 91.1 |
| S12 | 348.6 | 94.1% | 61.6 | 21.5 | 91.2 |
| S13 | 346.3 | 94.7% | 62.0 | 21.6 | 91.4 |
| S14 | 346.3 | 94.5% | 61.8 | 21.3 | 91.2 |
| S15 | 346.8 | 94.7% | 61.7 | 21.4 | 91.3 |
| S16 | 343.7 | 93.8% | 55.8 | 16.1 | 90.8 |
| S17 | 345.8 | 94.5% | 62.1 | 21.7 | 91.5 |
| S18 | 347.4 | 94.8% | 61.6 | 21.4 | 90.9 |
| S19 | 342.9 | 94.2% | 55.6 | 16.2 | 90.8 |
| S20 | 347.4 | 94.7% | 61.4 | 20.9 | 91.2 |
| D1 | 339.4 | 90.4% | 51.3 | 14.7 | 90.6 |

| | | | | | |
|---|---|---|---|---|---|
| D2 | 350.4 | 93.3% | 54.8 | 15.6 | 89.5 |
| D3 | 353.5 | 93.6% | 52.8 | 15.3 | 89.0 |

According to the test data of Examples 1 to 20, it can be seen that an interior and/or a surface of the graphite particle prepared in an example of the present disclosure forms pores. The pores can serve as an additional lithium storage space, thereby improving lithium storage capacity of the anode material, and the specific capacity of the anode material can reach 343mAh/g or more. By controlling V*S/T within a range of 8.5 to 27, it is ensured that the lithium ions are more smoothly de-intercalated inside the anode material particles in the proper space and the reaction interface, thereby improving the electrochemical performance of the anode material.

The anode material prepared by a discontinuous graphitization process in Comparative Example 1 has an excessively large specific surface area and an excessively small tap density, resulting in V*S/T deviating from the above range. The specific capacity and the rate performance of the material are significantly reduced compared with those in Examples 1 to 2 produced from the same raw material.

The anode material prepared by a discontinuous graphitization process in Comparative Example 2 has insufficient artificial graphite pores, an excessively small pore volume V, and an excessively large tap density, resulting in V*S/T deviating from the above range. Surface effective active sites of the artificial graphite used as the anode material for a lithium de-intercalation reaction are reduced, and the rate performance of the material is significantly reduced.

Although the anode material was prepared by a continuous graphitization process in Comparative Example 3, there was no addition of binder, and no control of temperature rising and falling rate of graphitization and the ratio of the heating rate of graphitization to the heating rate of carbonization, resulting in V*S/T deviating from the above range, and the capacity and the rate performance are worse than those produced under the same process conditions in Examples 1 to 2.

Although the present disclosure is disclosed above in terms of preferred examples, it is not intended to limit the claims, and several possible changes and modifications can be made by any those skilled in the art without departing from the concept of the present disclosure, so the protection scope of the present disclosure should be defined by the claims of the present disclosure.

## Claims

1. An anode material, comprising artificial graphite, wherein an interior and/or a surface of the artificial graphite has pores, and the anode material has a pore volume of V cm³/kg, a specific surface area of S m²/g, and a tap density of T g/mL, where 8.5≤V*S/T≤27; and
wherein the pore volume is tested by using ASAP2460 device from American Micromeritics Instrument Ltd., and calculated in a pore size range of 17Å to 3000Å by using a model of BJH Desortation cumulative volume of pores.

2. The anode material according to claim 1, wherein the pore volume of the anode material is V cm³/kg, where 5.0≤V≤8.0.

3. The anode material according to claim 1, wherein the specific surface area of the anode material is S m²/g, where 1.78≤S≤3.00.

4. The anode material according to claim 1, wherein the tap density of the anode material is T g/mL, where 0.734≤T≤1.160.

5. The anode material according to claim 1, wherein the anode material satisfies at least one of following features:
(1) the pores comprise at least one of micro-pores and meso-pores; and
(2) the pores have an average pore size ranging from 50Å to 200Å.

6. The anode material according to claim 1, wherein the anode material has a crystal plane spacing d₀₀₂ of a plane (002) of a graphite crystal determined by X-ray diffraction, where 3.356Å≤d₀₀₂≤3.364Å.

7. The anode material according to claim 1, wherein the anode material has a particle size D₅₀ ranging from 10µm to 30µm.

8. The anode material according to claim 1, wherein the anode material comprises artificial graphite primary particles and/or artificial graphite secondary particles.

9. The anode material according to any one of claims 1 to 8, wherein the anode material satisfies at least one of following features:
(1) the anode material further comprises amorphous carbon; and
(2) the anode material further comprises the amorphous carbon, and a mass proportion of the amorphous carbon in the anode material ranges from 0. 1wt% to 5wt%.

10. A battery, comprising an anode material according to any one of claims 1 to 9.
